**Europäisches Patentamt**

**(19)** **European Patent Office**

**Office européen des brevets**

**(11)** Publication number : **0 428 703 B1**

**(12)** # EUROPEAN PATENT SPECIFICATION

**(45)** Date of publication of patent specification :
30.11.94 Bulletin 94/48

**(51)** Int. Cl.[5] : **G07C 3/00**

**(21)** Application number : **90909783.4**

**(22)** Date of filing : **13.06.90**

**(86)** International application number :
**PCT/SE90/00414**

**(87)** International publication number :
**WO 90/16048 27.12.90 Gazette 90/29**

**(54) A METHOD FOR MONITORING THE OPERATIONAL STATE OF A SYSTEM.**

**(30)** Priority : **14.06.89 SE 8902146**

**(43)** Date of publication of application :
**29.05.91 Bulletin 91/22**

**(45)** Publication of the grant of the patent :
**30.11.94 Bulletin 94/48**

**(84)** Designated Contracting States :
**DE FR GB**

**(56)** References cited :
**BOOK "CHEMICAL PATTERN RECOG-
NITION", O. STROUF; Ed. John Wiley & Sons
Inc.**

**(56)** References cited :
**PROCEEDINGS OF SYMPOSIUM ON APPLIED
STATISTICS, COPENHAGEN ; JANUARY 22,
1981 ; WOLD AND AL: PATTERN RECOGNI-
TION BY MEANS OF DISJOINT PRINCIPAL
COMPONENTS MODEL (SIMCA).
PHILOSOPHY AND METHODS.
FOOD RESEARCH AND DATA ANALYSIS, is-
sued 1983 (Applied Science Publishers, Lon-
don and New York) S. WOLD et al.: "Pattern
Recognition: Finding and using regularities in
multivariate data", pages 146-189**

**(73)** Proprietor : **LISZKA, Ludwik Jan
Parkvägen 4
S-910 36 Sävar (SE)**

**(72)** Inventor : **LISZKA, Ludwik Jan
Parkvägen 4
S-910 36 Sävar (SE)**

**(74)** Representative : **Modin, Jan et al
c/o Axel Ehrners Patentbyra AB
Box 10316
S-100 55 Stockholm (SE)**

## Description

The invention relates to a method of monitoring and/or diagnosing the current operational state of a complicated dynamic system constituted by a machine, apparatus or an industrial process installation.

Such a method, intended for monitoring machine vibrations while utilizing frequency analysis as well as sampling and pattern recognition techniques is known from EP-A-84902732.1 (WO-A-8500455), the reference class being frequency spectra and the pattern recognition and detection means being adapted such as to calculate the probability for each new frequency spectrum that it belongs to a class other than the reference class. An abnormal operational state of the machine is determined when this probability exceeds a predetermined limit.

According to the present invention, it is not only a question of analysing occuring vibrations, but a large number of measurable or calculable physical and possibly even logical parameters or state variables, which to a greater or less extent may be considered as effecting the operational state of a complicated system.

For example, in the operation and maintenance of complicated machines, e.g. jet engines, measurements of a large number of statistic and dynamic state variables are collected. Accordingly, being able to readily indicate an unfavourable combination of such variables is of the greatest importance here, not only with regard to limit values decided for each individual variable. The situation is similar for process installations, e.g. paper manufacture or energy conversion (such as in nuclear power stations).

There is further a desire of being able to calculate beforehand whether a proposed modification of a proven system will give acceptable results.

A parmount object of the present invention is thus to monitor and/or diagnose, possibly by calculation performed beforehand, and with the aid of mathematical, statistical methods, the existing operational state of a complicated machine, apparatus or process installation and in such a case either identify a specific operational state (corresponding to a reference class) or determine a deviating operational state by simultaneously identifying what state variables cause the deviation.

This object is achieved by the process of steps disclosed in claim 1.

Statistic methods known per se are thus applied in accordance with the invention, these methods being used within so-called multivariate analysis, e.g. for rapidly discovering an undesired state in a machine and pointing out individual variables or groups of variables responsible for this state. The method may be applied either in real time, namely to incoming measurement values, or to data bases, where the measurement values have been stored.

The invention will know be explained in more detail below and with reference to the accompanying drawings, where

Fig. A is a schematic diagram over the measuring and data equipment, its structure being known per se, which is used in the method according to the invention;

Figs. 1 - 3 are flow diagrams corresponding to some application examples A, B and C of the prior art;

Fig. 1a schematically illustrates a variant of the application example A; and

Fig. 3a is a flow diagram according to the method of the invention.

The invention is founded on the following procedures:

The measurement values for different state variables $V_i$ are obtained from suitable measuring sensors after amplification, filtering and digitizing (see Fig. A). For rotating machines both static and dynamic state variables may be used, e.g. the dimensions, taken from a coordinate table, of the machine components, clearance and play between given parts, throw and inbalance measured in a balancing machine, as well as different types of vibrations.

Measurement of M different state variables $V_i$ is repeated at different instances N times. The results ($X_{ik}$, i = 1, ..., M; k = 1, ..., N), which form a matrix or table with the dimensions M x N can be presented in a N-dimensional space as a cluster of N dots. The appearance of the cluster can be described, for example with the aid of a covariance matrix. If the dots have been collected during two different states of the system they will form, with the greatest probability, two clusters in the M space, provided that among the state variables there are precisely those which differentiate the current states in the system. A possibility is that the major part of the measurement data, which are derived from one or more known states of the system (so-called learning groups), are combined with a plurality of current measurement data which are to be tested (a test group).

For easy handling of this type of multivariate measurement data it is proposed that a coordinate transformation is made. For such a transformation to be utilizable it must:
- reduce the number of coordinate directions;
- maintain the variance of the dot clusters; and
- separate different dot clusters in the best way.

A transformation found to meet these conditions is the so-called principal component method, which has been previously used in chemical data processing and in qualitative analysis of food-stuff. In this connection reference is made to the article "Pattern Recognition: Finding and using regularities in multivariate data" by S. Wold, C. Albano, W.J. Dunn, K. Esbensen, S. Hellberg, E. Johansson and M. Sjöström in the publication "Food Research and Data Analysis" Applied Science Publishers, London and New York, 1983.

Applied to monitoring the state of machines, apparatus or industrial process installations, this principal component method means that multivariate measurement data Xik are approximated by linear projection to a new coordinate system with fewer coordinate axes (L; L < M) according to the relationship:

$$X_{ik} = A_i + \sum_{a=1}^{L} B_{ia}T_{ak} + R_{ik}$$

where the new variables A, B and T describe the systematic part of the measurement data $X_{ik}$, and where the residue matrix $R_{ik}$ describes the random part of $X_{ik}$. It should be pointed out that the transformation separates measurement data into parameters (A, B) describing the state variables, on the one hand, and parameters (T) describing the system state at the respective measurement (k), on the other hand. The parameters $T_{ak}$ describe the location of the k-state in the M-dimensional dot cluster and are therefore used for discriminating state classes.

Adaptation of the principal components takes place in consecutive steps, one component at a time.

The procedure starts by normalizing the measurement data matrix $X_{ik}$ with the standard deviation $s_i$ of the respective state variable $V_i$, so that all variables will be of appoximately the same order of magnitude, the mean value $A_i$ being substracted, i.e. the matrix $X_{ik} - A_i$ is formed. At this stage the first principal component

$$PC1 = B_{i1}\,T_{ik}$$

is adapted while using the so-called NIPAL's algorithm (Appendix A in the above mentioned article by Word et al), which in short means that beginning with an attempt or qualified guess with respect to the vector B, the vector T is calculated and the convergence is checked, which is repeated until the desired accuracy has been achieved. The first residue matrix $Ri_{k1} = X_{ik}-A_i-PC1$ is then formed, which is used as the input matrix for determining the next (second) principal component, etc.

The number of components (L) is determined by the character of the data matrix. The process of adaptation can be terminated when no systematic parts remain in the residue matrix $R_{ik}$. For practical reasons the process can also be terminated after PC2. The state can then be depicted on a plane with coordinate axes corresponding to PC1 and PC2. A three-dimensional depiction can be constructed if the adaption is terminated after PC3. Three-dimensional depiction of measurement data are generally preferred.

It is of the greatest interest to find out how much different state variables contribute to the variance along each principal coordinate. In order to separate different state classes it is required, as mentioned above, that measurement data really do contain the state variables which are relevant for describing the classes. To decide this, the so-called modelling capacity $P_{ia}$ of the state variable $V_i$ along the respective coordinate axis a (a = 1, 2,..., L) is defined:

$$P_{ia} = 1 - s_{ia}(R_{ika}) / s_i (X_{ik} - A_i)$$

where $s_{ia}$ is the standard deviation for the residue matrix $R_{ika}$ and $s_i$ is the standard deviation for the matrix $(X_{ik} - A_i)$. $P_{ia}$ varies between 0 and 1. If $P_{ia}$ is close to 0, the variable $V_i$ does not affect the variance along the principal coordinate in question, and in principle can be ignored. The modelling capacity can also be expressed as a percentage. In addition, the total modelling capacity $P_{it}$ for PC1, PC2 and PC3 is defined according to the following:

$$P_{it} = \sqrt{(P_{i1}^2 + P_{i2}^2 + P_{i3}^2)/3}$$

Variables with a total modelling capacity $P_{it}$ close to 1 are denoted "strong" variables. Strong variables are relevant for identifying different states, particularly fault states. Knowledge of these variables helps the operator to identify faults in machines, for example, or may be used in coaction with a knowledge base for automatic fault identification.

Some practical examples A, B and C of the prior art method are given below.

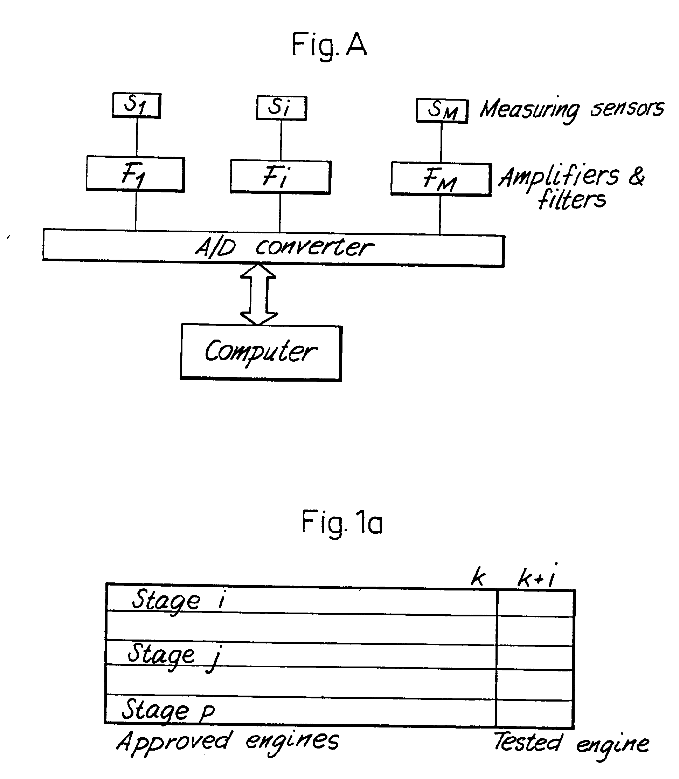

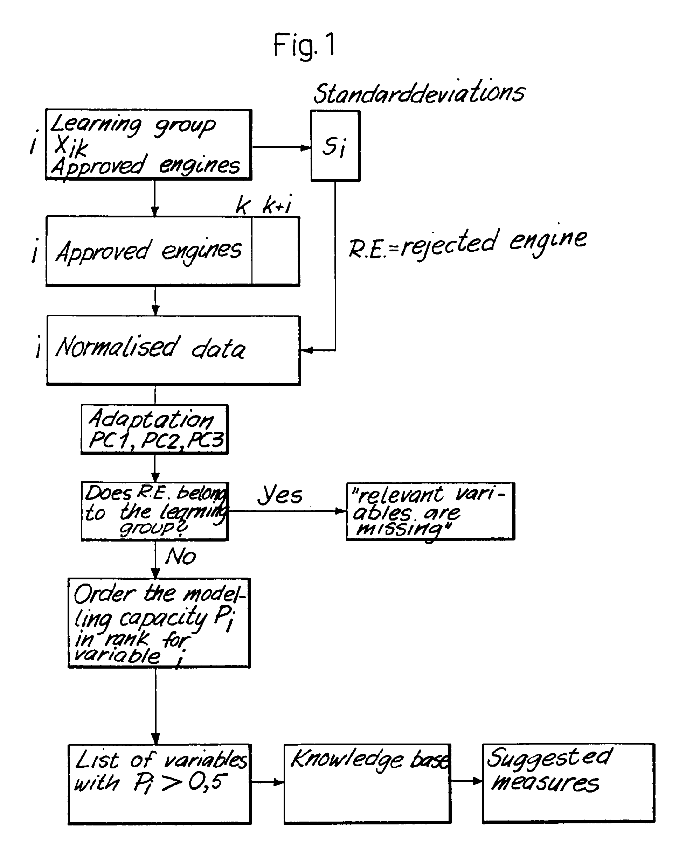

<u>Example A. Analysis of a data base with motor parameters (se Fig.1)</u>

In connection with the inspection of a jet engine, about a hundred different static and dynamic variables in the engine are measured. Thus, e.g. tolerance and throw in different parts of the rotor-stator system are measured accurately. The measurements are placed in a data base. When an engine has been approved after inspection, these measurement values are stored together with the engine documents. On the other hand, when an engine has been rejected, attempts have been made in different ways to search among about a hundred measurement variables for the one or ones which have caused the rejection. This is an insolvable problem using elementary stastics as the sole aid. The use of conventional packages for advanced statistic analysis is unfortunately too time-consuming for enabling their operational use.

However, in applying the method, about ten data base posts from approved engines are used as a learning group. The post for the tested, rejected engine is added to the table (matrix). After principal coordinate transforming, the variables are ordered in rank with a modelling capacity according to size. In this way the one or ones of the state variables which are responsible with the greatest probability for rejection of the motor can be indicated. In combination with a knowledge base (a rule system) directions as to required technical measures can be worked out. If the method is applied before the final check in a test bench economies can be made in many cases, since the number of rejections after checking can be reduced.

A variation of this example is that the data vectors (the columns in the total data matrix) for the approved engines are divided into sections corresponding to different work stages $j$ (see Fig. 1a) during assembly of the engine ($j = 1, ....P$). In a corresponding way the data vector is divided for the tested engine and the analysis is made of each terminated work stage of a growing data matrix. This gives the possibility of breaking off the costly assembly process as soon as it is found that the tested engine will belong to the group of non-approved engines. At this stage the problem can be solved by using another selection of parts or further adjustment.

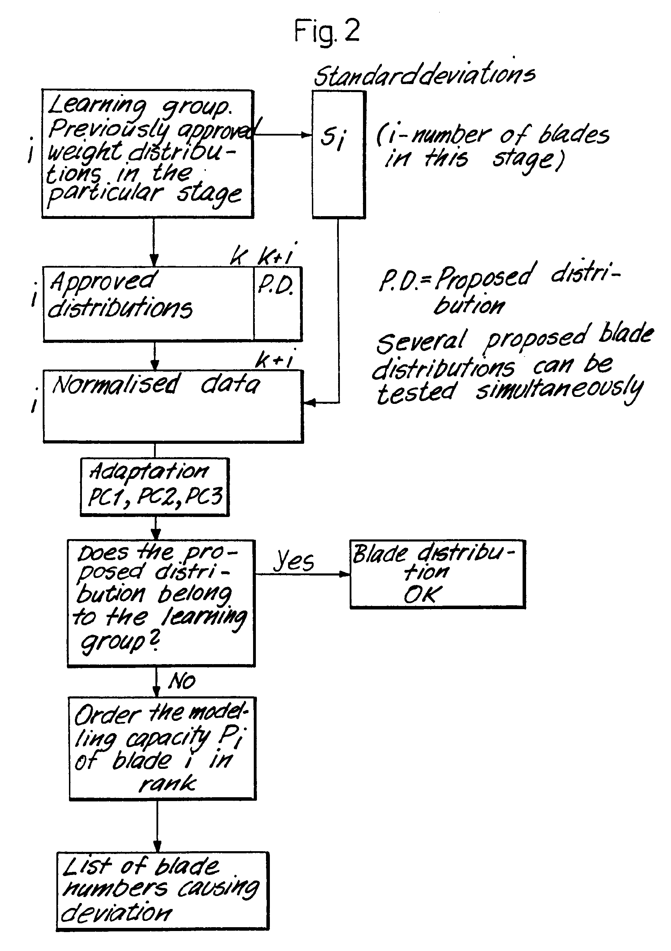

Example B. Checking blade distribution in rotor discs (see Fig. 2)

Hitherto, the blades in a rotor disc are distributed according to simple rules decided by the manufacturer, with respect to the momentum weight of each blade. Computer programs calculating the distribution of blades around the rotor disc have also begun to come into use. Such a program distributes the blades with reference to their momentum weights so that inbalance is minimized. The method in accordance with the present invention enables the checking of a blade distribution arranged according to experience or calculation by comparison with previous, successful blade distributions, preferably from the same engine. Information in a data base containing such distributions of momentum weights which have given satisfactory dynamic properties are compared with a proposed distribution. It is here possible to obtain a measure of the quality of goodness of the distribution (distance to the group "successful distributions"), and an account of the blades causing possible negative dynamic properties in the rotor stage (strong variables) can thus be obtained. It is also possible to test several proposed distributions simultaneously.

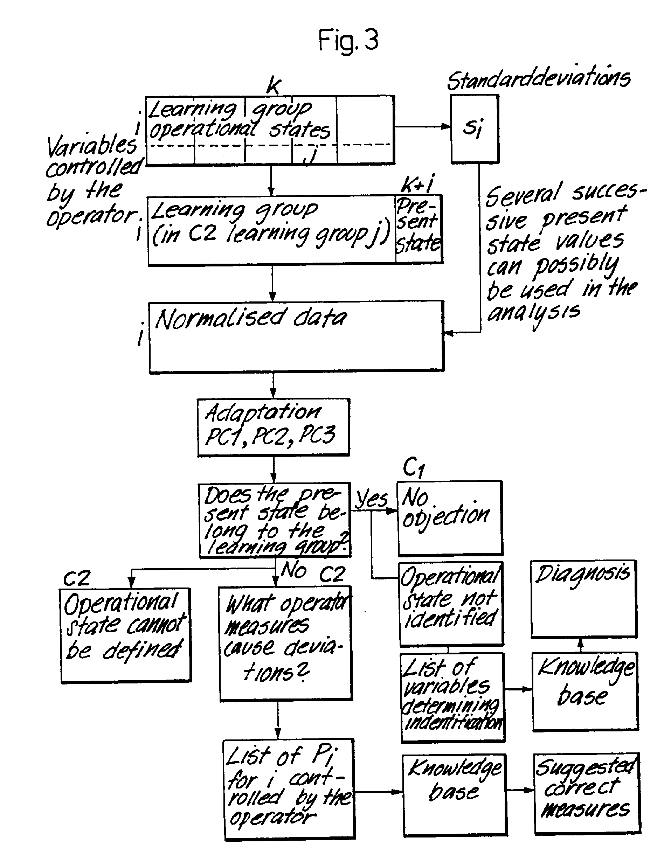

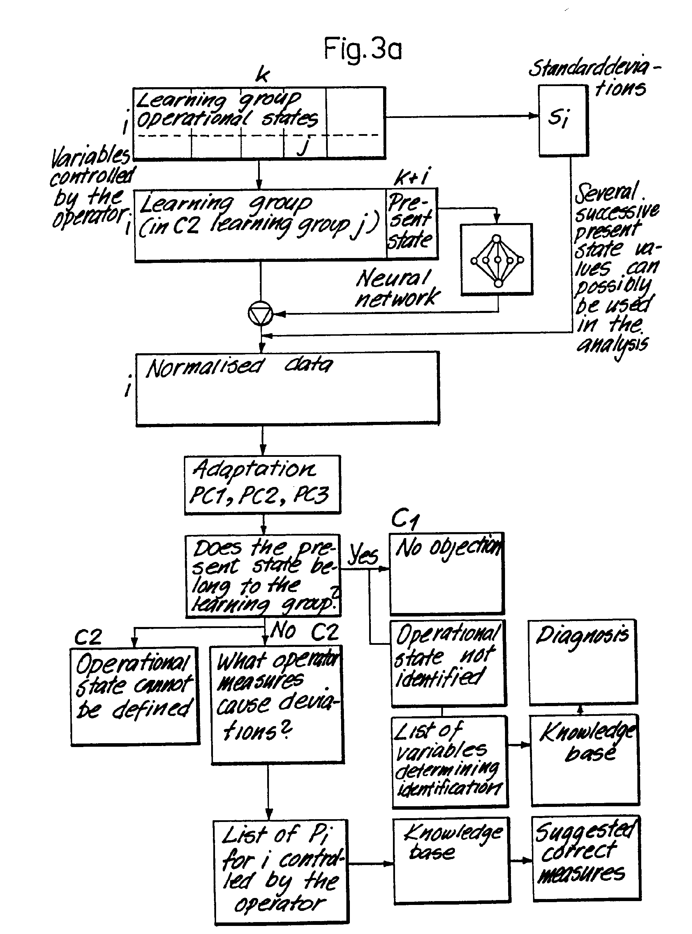

Example C. Monitoring and advising with the engine running on a test bench (see Fig. 3).

When running an engine on a test bench, a large number M (usually about a hundred) operational variables are measured and stored. In modern test bench equipments the positions of all manual controls handled by the operator are also read off. Hitherto, the automatic monitoring is arranged such that maximum and minimum limits are given for certain essential variables, and that the system gives an alarm for certain programmed combinations of discrete and logical variables. The system thus gives an alarm for previously known undesired situations.

The method can here be applied according to two different variations for an engine running on a test bench:

Variation 1. A large learning group is formed containing 2 - 3 measurements for each permitted operational situation (corresponding to a specific reference class). Each new measurement ("present state" in Fig. 3) is continuously added to the table or data matrix thus obtained. The new measurement (a dot in the M-dimentional space) is tested with respect to its distance to the learning group. If the new dot is outside those of the learning group, a deviating stage is established and possible strong variables are accounted for. If measures taken by the operator give rise to strong variables the system can, with support of a knowledge base, give the operator advice and information about suitable measures in this situation. Possible operator errors can be discovered and dealt with in this way.

Variation 2. Several learning groups are formed, one for each interesting operational situation. Each learning group contains about ten measuring points coming from this situation. Certain undesired situations, e.g. faults or errors, can be stored among the learning groups. Each new measuring point, or several consecutive incoming measuring points can then be tested against the learning groups. By searching for the best adaptation to a learning group, the operational situation can be identified with great certainty. A simultaneous account of strong variables can, in combination with a knowledge base, be used for achieving a diagnosis and for giving advice with respect to possible measures.

Both variations can be used both in real time as well as subsequently for analysis of collected measurement data. Both variations can further be used on all types of machines, apparatus or industrial process installations, where a large number of operational variables make the situation difficult for a human being to comprehend.

According to the invention this method can be made even more effective (see Fig. 3a) if the data vector in question ("present state") is transferred to an autoassociative neural network, e.g. of the type ART (Adaptive Resonance Theory Network), as decribed in Carpenter, G.A., Grossberg, S., "A Massively Parallel Architecture for a Self-Organizing Neural Pattern Recognition Machine", Computer Vision, Graphics and Image Processing 37, pp 54-115, 1987. The network is trained with typical data from normal operational conditions. The remaining part of the data flow is only activated on the discovery of a new category, for then carrying out the complete statistical analysis. In this way the statistical analysis does not need to be made during normal operational conditions.

## Claims

1. Method of monitoring and/or diagnosing the current operational state of a complicated, dynamic system constituted by a machine with a plurality of components, an apparatus or an industrial process installation with a plurality of state variables specific to the process, such as temperatures, flows, etc, a plurality (M) of physical and possibly also logical state variables ($V_i, i = 1, 2, ..., M$) for said system being measured at a number (N) of instances ($t_k, k = 1, 2, ..., N$) for making up a corresponding number (MxN) of measurement data ($X_{ik}; i = 1, 2, ..., M; k = 1, 2, ..., N$), which are processed according to statistical methods in a computer for forming a plurality of reference classes corresponding to specific operational states of the system, the current measurement or calculation data ($X_{ik}; i = 1, 2, ..., M$) being compared with said reference class or classes for diagnosing the corresponding, current operational state of the system, wherein

   - a group of measurement data ($X_{ik}; i = 1, 2, ..., M; k = 1, 2, ..., N'; N' < N$) derived from the measurement of said state variables serves as a learning group for forming the respective reference class, these measurement data ($X_{ik}$) being adapted in a manner known per se by linear projection to a new coordinate system with fewer coordinate axes ($L; L < M$) while retaining the variance of the measurement data and the selectivity of different operational states, according to the relationship

$$X_{ik} = A_i + \sum_{a=1}^{L} B_{ia}T_{ak} + R_{ik};$$

   $i = 1, 2, ..., M; k = 1, 2..., N'$, where

   $A_i$      is the mean value of the respective state variable ($V_i$);

   $B_{ia}$ and $T_{ak}$      are a reduced number of parameters in the new coordinate system essentially corresponding to the systematic part of the measurement data;

   $R_{ik}$      is a residue matrix essentially corresponding to the random part of the measurement data;

   - said current measurement or calculation data ($X_{ik}; i = = 1, 2, ... M; N' < k < N$) are adapted in a corresponding manner to said new coordinate system,

   - checking in an autoassociative neural network as to whether the current operational state belongs to one of the reference class or classes, and, if so, thus identifying the current operational state, and

   - in the case where said autoassociative neural network check has not identified the current operational state, the current operational state of the system is compared with said specific operational state by determining the mutual distance between said current measurement or calculation data, on the one hand, and the measurement data corresponding to the respective learning group, on the other hand, in the new coordinate system, and, in the case where said distance falls below a predetermined value, the corresponding specific operational state of the system is identified, and, in the case where said distance exceeds a predetermined value, it is determined what state variables and, on the basis thereof, what component(s) or state variables(s) specific to an industrial process respectively, that cause the deviation by calculating the effect of the respective state variable on the variance along the respective coordinate axis in the new coordinate system.

2. Method as claimed in claim 1, **characterized** in that said adaptation of measurement data ($X_{ik}$) to the new coordinate system is carried out in steps, the respective coordinate axis in the each step (a; a = 1,2, ..., L) being selected such that the variance for said parameters ($B_{ia}, T_{ak}$) along this coordinate axis is minimized.

3. Method as claimed in claim 2, **characterized** in that said stepwise adaptation is carried out according to NIPAL's algorithm.

4. Method as claimed in claim 2 or 3, **characterized** in that the new coordinate system has one, two or three coordinate axes (L=1,2 or 3).

5. Method as claimed in any one of claims 2 - 4, **characterized** in that said calculation of the effect on the variance along the respective coordinate axis caused by the respective state variable is carried out on the basis of the so-called modelling capacity ($P_{ia}$; a = 1, .. L) of the respective state variable according to the formula:

$$P_{ia} = 1 - s_{ia}(R_{ika})/s_i(X_{ik} - A_i);$$

where

$s_{ia}$ and $s_i$ are the standard deviations of $R_{ika}$ and $A_i$, respectively; and

$R_{ika}$ is the residue matrix after the respective adaptation step (a);

this modelling capacity ($P_{ia}$) being able to assume values between 0 and 1 and the total modelling capacity ($P_{it}$) of the state variable being calculated as a combination of the values of the different adaptation steps (a) so that a total modelling capacity between 0.5 and 1 points out the state variable in question as contributing to said deviation.

6. Method as claimed in claim 5, **characterized** in that the total modelling capacity ($P_{it}$) of the respective state variable is calculated according to the formula:

$$P_{it} = \sqrt{\frac{P_{i1}^2 + ... + P_{iL}^2}{L}}$$

7. Method as claimed in any one of the preceding claims, **characterized** in that said measurement or calculation data ($X_{ik}$) are normalized with the standard deviation ($s_i$) of the respective state variable, calculated on said learning group, before said adaptation to the new coordinate system.

8. Method as claimed in any one of the preceding claims for analysing previously made measurement data stored in a data base and relating to several systems of the same type, said systems having been approved of or rejected on inspection or test operation, **characterized** in that a plurality of measurement data posts derived from approved systems are used as a learning group, and one or more measurement data posts derived from rejected systems are used as said current measurement data, there being produced a list of the state variables which have, with a certain probability, contributed to rejection of the system.

9. Method as claimed in any one of claims 1 - 8 for monitoring different operational states in test running of complicated systems, which are at least partially controlled manually by an operator, **characterized** in that a plurality of measurement data posts derived from permitted operational states are used as one or more learning groups, which are successively supplemented with current measurement data derived from the test run, deviating operational states and state variables causing these being accounted for continuously for diagnosis and possible measures to be taken by the operator.

10. Method as claimed in any one of claims 1 - 7 for calculating beforehand whether a proposed modification to a tested system will give acceptable results, **characterized** in that measurement data posts, derived from a plurality of tested and approved systems of a similar kind, are used as a learning group, whereas computer calculated data corresponding to said proposed modification are used as said current data.

**Patentansprüche**

1. Verfahren zum Überwachen bzw. Steuern und/oder Diagnostizieren des laufenden Funktions- bzw. Betriebszustandes eines komplizierten, dynamischen Systems, das aus einer Maschine mit einer Mehrzahl an Komponenten besteht, eines Gerätes oder einer industriellen Prozeßinstallation mit einer Mehrzahl für den Prozeß spezifischer Zustandsvariablen, wie Temperaturen, Flüsse, etc., einer Mehrzahl (M) physikalischer und möglicherweise auch logischer Zustandsvariablen ($V_i$, i = 1,2, ...., M) für das System, die zu einer Anzahl (N) an Zeitpunkten ($t_k$, k = 1, 2, ...., N) gemessen werden, um eine entsprechende Anzahl (MxN) an Meßdaten ($X_{ik}$; i = 1, 2, ..., M; k = 1, 2, ..., N) aufzustellen, die gemäß statistischer Verfahren in einem Computer zum Ausbilden einer Mehrzahl an Referenzklassen, entsprechend spezifischer Funktionszustände des Systems, gebildet werden, wobei die laufende Messung oder Berechnungsdaten ($X_{ik}$; i = 1, 2, ..., M) mit der Referenzklasse oder Klassen zum Diagnostizieren des entsprechenden, laufenden Funktionszustandes des Systems verglichen werden, wobei

- eine Gruppe an Meßdaten ($X_{ik}$; i = 1,2, ..., M; k = 1,2, ...., N'; N'< N), abgeleitet aus der Messung der Zustandsvariablen, als Lerngruppe zum Ausbilden der jeweiligen Referenzklasse dient, diese Meßdaten ($X_{ik}$) in einer per se bekannten Art und Weise durch lineare Projektion auf ein neues Koordinatensystem mit weniger Koordinatenachsen (L; L < M) angepaßt werden, während die Varianz der Meßdaten und die Selektivität der verschiedenen Funktionszustände beibehalten wird, gemäß der Beziehung:

$$X_{ik} = A_i + \sum_{a=1}^{L} B_{ia}T_{ak} + R_{ik};$$

i=1,2, ...M; k=1,2, ...N', in der

$A_i$ der Durchschnittswert der jeweiligen Zustandsvariablen ($V_i$) ist;

$B_{ia}$ und $T_{ak}$ eine reduzierte Anzahl an Parametern in den neuen Koordinatensystem sind, im wesentlichen entsprechend dem systematischen Teil der Meßdaten;

$R_{ik}$ eine Residuen-Matrix ist, im wesentlichen entsprechend dem Zufailsanteil der Meßdaten;

- wobei die laufende Messung oder die Berechnungsdaten ($X_{ik}$; i = 1, 2, ... M; N'<k<N) auf eine entsprechende Art und Weise an das neue Koordinatensystem angepaßt werden,
- in einem autoassoziativem neuronalen Netzwerk geprüft wird, ob der laufende Funktionszustand zu einer oder zu den Referenzklassen gehört, und falls ja, somit der laufende Funktionszustand identifiziert wird, und
- in dem Fall, daß die autoassoziative neuronale Netzwerkprüfung den laufenden Funktionszustand nicht identifiziert hat, der laufende Funktionszustand des Systems mit dem spezifischen Funktionszustand verglichen wird, indem der gegenseitige Abstand zwischen, auf der eine Seite der laufenden Messung oder den Berechnungsdaten, und auf der anderen Seite der Meßdaten entsprechend der jeweiligen Lerngruppe, in dem neuen Koordinatensystem bestimmt wird, und, in dem Fall, daß der Abstand unterhalb eines vorbestimmten Wertes fällt, der entsprechende spezifische Funktionszustand des Systems identifiziert wird, und, in dem Fall, daß der Abstand einen vorbestimmten Wert überschreitet, bestimmt wird, welche Zustandsvariablen und, auf deren Basis, welche für einen jeweiligen industriellen Prozeß spezifische(n) Komponente(n) oder Zustandsvariable(n) die Abweichung verursachen, indem die Wirkung der jeweiligen Zustandsvariable auf die Varianz entlang der jeweiligen Koordinatenachse in dem neuen Koordinatensystem berechnet wird.

2.  Verfahren nach Anspruch 1, dadurch kennzeichnet, daß die Anpassung der Meßdaten ($X_{ik}$) an das neue Koordinatensystem schrittweise ausgeführt wird, wobei die jeweiligen Koordinatenachsen in jedem Schritt (a; a= 1,2, ..., L) so ausgewählt werden, daß die Varianz für die Parameter ($B_{ia}$, $T_{ak}$) entlang dieser Koordinatenachse minimalisiert wird.

3.  Verfahren nach Anspruch 2, dadurch gekennzeichnet, daß die schrittweise Anpassung nach dem NIPAL Algorithmus ausgeführt wird.

4.  Verfahren nach Anspruch 2 oder 3, dadurch gekennzeichnet, daß das neue Koordinatensystem eine, zwei oder drei Koordinatenachsen (L = 1, 2 oder 3) aufweist.

5.  Verfahren nach einem der Ansprüche 2-4, dadurch gekennzeichnet, daß die Berechnung der Wirkung auf die Varianz entlang der jeweiligen Koordinatenachsen, welche durch die jeweilige Zustandsvariable verursacht wird, auf der Basis der sogenannten modellierenden Kapazität (modelling capacity) ($P_{ia}$; a = 1, ..L) der jeweiligen Zustandsvariable ausgeführt wird, gemäß der Formel:

$$P_{ia} = 1 - s_{ia}(R_{ika})/s_i(X_{ik} - A_i);$$

in der

$s_{ia}$ und $s_i$ die Standardabweichungen von $R_{ika}$ bzw. $A_i$ sind; und

$R_{ika}$ die Residuen-Matrix nach dem jeweiligen Anpassungsschritt (a) ist;

wobei diese modellierende Kapazität ($P_{ia}$) fähig ist, Werte zwischen 0 und 1 anzunehmen und die totale modellierende Kapazität ($P_{it}$) der Zustandsvariable als eine Kombination der Werte aus den verschiedenen Anpassungsschritten (a) so berechnet wird, daß eine totale modellierende Kapazität zwischen 0.5 und 1 die gefragte Zustandsvariable als Beitrag zu der Abweichung ausgibt.

6. Verfahren nach Anspruch 5, dadurch gekennzeichnet, daß die totale modellierende Kapazität ($P_{it}$) der jeweiligen Zustandsvariable nach folgender Formel berechnet wird:

$$P_{it} = \sqrt{\frac{P_{i1}^2 + ... + P_{iL}^2}{L}}$$

7. Verfahren nach einem der vorstehenden Ansprüche, dadurch gekennzeichnet, daß die Messung oder die Berechnungsdaten ($X_{ik}$) mit der Standardabweichung ($s_i$) der jeweiligen Zustandsvariable normalisiert werden, die auf der Lerngruppe berechnet sind, vor der Anpassung an das neue Koordinatensystem.

8. Verfahren nach einem der vorstehenden Ansprüche zum Analysieren zuvor gemachter Meßdaten, die in einer Datenbasis gespeichert sind und sich auf mehrere Systeme des selben Typs beziehen, wobei die Systeme durch Inspektion oder Testoperationen zugelassen oder zurückgewiesen worden sind, dadurch gekennzeichnet, daß eine Mehrzahl an Meßdatenposten, die von den zugelassenen Systemen abgeleitet wurden, als eine Lerngruppe benutzt werden, und ein oder mehrere Meßdatenposten, die von den zurückgewiesenen Systemen abgeleitet wurden, als laufende Meßdaten benutzt werden, wobei dort eine Liste an Zustandsvariablen produziert wird, welche, mit einer bestimmten Wahrscheinlichkeit, sich an der Zurückweisung des Systems beteiligt hat.

9. Verfahren nach einem der Ansprüche 1 bis 8 zum Überwachen verschiedener Funktionsszustände im Testlauf komplizierter Systeme, die zumindest teilweise manuell von einem Bediener gesteuert werden, dadurch gekennzeichnet, daß eine Mehrzahl an Meßdatenposten, die von den erlaubten Funktionszuständen abgeleitet wurden, als eine oder mehrere Lerngruppen benutzt werden, die nacheinander mit den laufenden Meßdaten aufgefüllt werden, die von dem Testlauf abgeleitet wurden, wobei abweichende Funktionszustände und Zustandsvariablen, die diese verursachen, kontinuierlich der Diagnose und möglichen vom Bediener ergriffenen Maßnahmen zugerechnet werden.

10. Verfahren nach einem der Ansprüche 1 bis 7 zum vorzeitigen Berechnen, ob eine vorgeschlagene Modifikation an einem getesteten System akzeptable Resultate geben wird, dadurch gekennzeichnet, daß die Meßdatenposten, die von einer Mehrzahl getesteter und zugelassener Systeme eines ähnlichen Typs abgeleitet wurden, als eine Lerngruppe benutzt werden, wobei vom Computer berechnete Daten entsprechend der vorgeschlagenen Modifikation als laufende Daten benutzt werden.

**Revendications**

1. Procédé de surveillance et/ou de diagnostic de l'état de fonctionnement courant d'un système dynamique compliqué, constitué par une machine ayant une pluralité de composants, un appareil ou une installation de processus industriel ayant une pluralité de variables d'état spécifiques du processus, comme des températures, des débits, etc., une pluralité (M) de variables d'état physiques et éventuellement également logiques ($V_i$, i = 1, 2, ..., M) pour ledit système qui sont mesurées à un certain nombre (N) d'instants ($t_k$, k = 1, 2, ..., N) pour réaliser un nombre correspondant (M x N) de données de mesure ($X_{ik}$ ; i = 1, 2, ..., M) ; k = 1, 2, ..., N), qui sont traitées selon des procédés statistiques dans un ordinateur pour former une pluralité de classe, ou de classes, de référence correspondant à des états de fonctionnement spécifiques du système, les données courantes de mesure ou de calcul ($X_{ik}$ ; i = 1, 2, ..., M) étant comparées à ladite classe, ou auxdites classes, de référence pour diagnostiquer l'état de fonctionnement courant correspondant du système ;

dans lequel un groupe de données de mesure ($X_{ik}$ ; i = 1, 2, ... M ; k = 1, 2, ..., N' ; N' < N), obtenu à partir de la mesure desdites variables d'état, sert de groupe d'apprentissage pour former la classe de référence respective, ces données de mesure ($X_{ik}$) étant adaptées d'une manière connue en elle-même par projection linéaire à un nouveau système de coordonnées avec un nombre plus petit d'axes de coordonnées (L ; L < M) tout en conservant la variance des données de mesure et la sélectivité des états de fonctionnement différents, d'après la relation :

$$X_{ik} = A_i + \sum_{a=1}^{L} B_{ia}T_{ak} + R_{ik};$$

$i = 1, 2,... M ; k = 1,2..,N'$,

où

$A_i$ est la valeur moyenne de la variable d'état respective ($V_i$) ;

$B_{ia}$ et $T_{ak}$ sont un nombre réduit de paramètres dans le nouveau système de coordonnées correspondant sensiblement à la partie systématique de la donnée de mesure ;

$R_{ik}$ est une matrice de résidus correspondant sensiblement à la partie aléatoire de la donnée de mesure ;

lesdites données courantes de mesure ou de calcul ($X_{ik}$ ; $i = 1, 2, ..., M$ ; $N' < k < N$) sont adaptées audit nouveau système de coordonnées d'une manière correspondante, en contrôlant dans un réseau de neurones auto-associatif si l'état de fonctionnement courant appartient à l'un de la classe, ou des classes, de référence, et, s'il en est ainsi en identifiant donc l'état de fonctionnement courant, et dans le cas où ledit contrôle de réseau de neurones auto-associatif n'a pas identifié l'état de fonctionnement courant, l'état de fonctionnement courant du système est comparé audit état de fonctionnement spécifique en déterminant la distance mutuelle entre lesdites données courantes de mesure ou de calcul, d'une part, et les données de mesure correspondant au groupe d'apprentissage respectif, d'autre part, dans le nouveau système de coordonnées, et dans le cas où ladite distance tombe au-dessous d'une valeur prédéterminée, l'état de fonctionnement spécifique correspondant du système est identifié, et, dans le cas où ladite distance dépasse une valeur prédéterminée, il est déterminé quelles variables d'état, et sur la base de celles-ci, quel(s) composant(s) ou quelle(s) variable(s) d'état spécifique(s) à un processus industriel, respectivement, provoque(nt) l'écart en calculant l'effet de la variable d'état respective sur la variance suivant l'axe de coordonnées respectif dans le nouveau système de coordonnées.

**2.** Procédé selon la revendication 1, caractérisé en ce que ladite adaptation des données de mesure ($X_{ik}$) au nouveau système de coordonnées est effectuée par étapes, l'axe de coordonnées respectif de chaque étape ($a$ ; $a = 1, 2, ..., L$) étant sélectionné de telle manière que la variance pour lesdits paramètres ($B_{ia}$, $T_{ak}$) le long de cet axe de coordonnées soit minimisée.

**3.** Procédé selon la revendication 2, caractérisé en ce que ladite adaptation par étapes est effectuée selon l'algorithme de NIPAL.

**4.** Procédé selon la revendication 2 ou 3, caractérisé en ce que le nouveau système de coordonnées comporte un, deux ou trois axes de coordonnées ($L = 1, 2$ ou $3$).

**5.** Procédé selon l'une quelconque des revendications 2 à 4, caractérisé en ce que ledit calcul de l'effet sur la variance suivant l'axe de coordonnées respectif provoqué par la variable d'état respective est effectué sur la base de ce qu'on appelle la capacité de modélisation ($P_{ia}$ ; $a = 1, ..., L$) de la variable d'état respective d'après la formule :

$$P_{ia} = 1 - s_{ia} (R_{ika})/s_i(X_{ik} - A_i) ;$$

où $s_{ia}$ et $s_i$ sont, respectivement, les écarts types de $R_{ika}$ et de $A_i$ ; et

$R_{ika}$ est la matrice de résidus après l'étape d'adaptation ($a$) respective ;

cette capacité de modélisation ($P_{ia}$) étant capable de prendre des valeurs entre 0 et 1 et la capacité de modélisation totale ($P_{it}$) de la variable d'état étant calculée comme une combinaison des valeurs des différentes étapes d'adaptation ($a$) de sorte qu'une capacité de modélisation totale entre 0,5 et 1 indique que la variable d'état en question contribue audit écart.

**6.** Procédé selon la revendication 5, caractérisé en ce que la capacité de modélisation totale ($P_{it}$) de la variable d'état respective est calculée d'après la formule :

$$P_{it} = \sqrt{\frac{P_{i1}^2 + ... + P_{iL}^2}{L}}$$

**7.** Procédé selon l'une quelconque des revendications précédentes, caractérisé en ce que lesdites données de mesure ou de calcul ($X_{ik}$) sont normalisées avec l'écart type ($s_i$) de la variable d'état respective, calculée sur ledit groupe d'apprentissage, avant ladite adaptation au nouveau système de coordonnées.

8. Procédé selon l'une quelconque des revendications précédentes, pour analyser des données de mesure réalisées préalablement, mémorisées dans une base de données, et se rapportant à plusieurs systèmes du même type, lesdits systèmes ayant été approuvés ou rejetés lors d'une opération d'examen ou d'essai, caractérisé en ce qu'une pluralité de postes de données de mesure obtenus à partir des systèmes approuvés sont utilisés comme un groupe d'apprentissage, et en ce qu'un ou plusieurs postes de données de mesure obtenus à partir des systèmes rejetés sont utilisés comme lesdites données de mesure courantes, en produisant ainsi une liste de variables d'état qui ont, avec une certaine probabilité, contribué au rejet du système.

9. Procédé selon l'une quelconque des revendications 1 à 8, pour surveiller des états de fonctionnement différents dans le déroulement des essais de systèmes compliqués, qui sont au moins partiellement commandés manuellement par un opérateur, caractérisé en ce qu'une pluralité de postes de données de mesure obtenus à partir d'états de fonctionnement autorisés sont utilisés comme un ou plusieurs groupes d'apprentissage, qui sont complétés successivement avec des données de mesure courantes obtenues à partir des états de fonctionnement s'écartant du déroulement d'essai et les variables d'état provoquant ceci étant prises en compte en continu pour le diagnostic et les mesures éventuelles à prendre par l'opérateur.

10. Procédé selon l'une quelconque des revendications 1 à 7, pour calculer préalablement si une modification proposée a un système en cours d'essai donnera des résultats acceptables, caractérisé en ce que des postes de données de mesure, obtenus d'une pluralité de systèmes essayés et approuvés d'un type similaire, sont utilisés comme groupes d'apprentissage, tandis que les données calculées par ordinateur correspondant à ladite modification proposée sont utilisées comme lesdites données courantes.

## Fig. A

| S₁ | | Sᵢ | | S_M | Measuring sensors |

$S_1$   $S_i$   $S_M$   Measuring sensors

$F_1$   $F_i$   $F_M$   Amplifiers & filters

A/D converter

Computer

## Fig. 1a

|  | k | k+i |
|---|---|---|
| Stage i | | |
| | | |
| Stage j | | |
| | | |
| Stage p | | |

Approved engines          Tested engine

# Fig. 1

Standarddeviations

$i$ | Learning group $X_{ik}$ Approved engines → $S_i$

$i$ | Approved engines $\qquad$ $K$ $k{+}i$

R.E.=rejected engine

$i$ | Normalised data

Adaptation PC1, PC2, PC3

Does R.E. belong to the learning group? — Yes → "relevant variables are missing"

No

Order the modelling capacity $P_i$ in rank for variable $i$

List of variables with $P_i > 0,5$ → Knowledge base → Suggested measures

# Fig. 2

Standarddeviations

$S_i$  (i-number of blades in this stage)

Learning group. Previously approved weight distributions in the particular stage  i

Approved distributions   K  K+i   P.D.   i

Normalised data   k+i   i

Adaptation PC1, PC2, PC3

Does the proposed distribution belong to the learning group?

Yes → Blade distribution OK

No

Order the modelling capacity $P_i$ of blade i in rank

List of blade numbers causing deviation

P.D.= Proposed distribution

Several proposed blade distributions can be tested simultaneously

# Fig. 3

## Fig. 3a

$k$

| Learning group operational states | | | |
|---|---|---|---|
| $i$ | | | |
| | | | $J$ | |

Variables controlled by the operator

$i$ Learning group (in C2 learning group $j$) | $k+i$ Present state

Standard deviations

$S_i$

Several successive present state values can possibly be used in the analysis

Neural network

$i$ Normalised data

Adaptation PC1, PC2, PC3

Does the present state belong to the learning group? — Yes → $C_1$ No objection

C2 Operational state cannot be defined

No C2 What operator measures cause deviations?

Operational state not identified

Diagnosis

List of variables determining identification → Knowledge base

List of $P_i$ for $i$ contrdled by the operator → Knowledge base → Suggested correct measures

15